# EUROPEAN PATENT APPLICATION

(11) **EP 4 678 374 A1**
(43) Date of publication of application: **14.01.2026**
(21) Application number: 25170405.2
(22) Date of filing: 14.04.2025
(51) Int. Cl.: B29C 48/08, B29C 48/31, B29C 48/92

(54) **EXTRUSION FILM-FORMING APPARATUS**

(30) Priority: 10.07.2024 JP 2024110832
(71) Applicant: Sumitomo Heavy Industries Modern, Ltd., Kanagawa 223-8511 (JP)
(72) Inventor: NAKANO, Katsuyuki, Yokohama Kanagawa 223-8511, (JP)
(74) Representative: Louis Pöhlau Lohrentz

(57) **Abstract**

There is provided an extrusion film-forming apparatus (2) capable of safely cutting a molding material that is melted or the like state extruded from a die (18) at a relatively low cost. The extrusion film-forming apparatus (2) includes: a die (18) that extrudes a molding material from a slit-shaped extrusion outlet (54); a die lip drive mechanism (56) that changes a slit width (D) of the extrusion outlet (54); and a control device (30) that controls the die lip drive mechanism (56), in which during the extrusion of the molding material, the control device (30) controls the die lip drive mechanism (56) to temporarily decrease the slit width (D) of the extrusion outlet (54) for cutting the extruded molding material.

## Description

### BACKGROUND OF THE INVENTION

### Field of the Invention

The present disclosure relates to an extrusion film-forming apparatus.

### Description of Related Art

In the related art, a film-forming device is known in which a molding material that is melted or softened (hereinafter, collectively referred to as "melting or the like") is extruded from a long and narrow extrusion outlet of a die to mold a film-shaped molding product (for example, Japanese Unexamined Patent Publication No. 2007-111953).

### SUMMARY OF THE INVENTION

In the extrusion film-forming apparatus, it is necessary to cut the molding material that is melted or the like and extruded from the die at various timings such as preparation for starting molding of a film.

In the related art, a worker approaches the molding material that is melted or the like and extruded from the die, and cuts the molding material with a spatula or the like. Meanwhile, this method is not desirable in terms of safety since the worker approaches the high-temperature molding material that is melted or the like.

Japanese Unexamined Patent Publication No. 2007-111953 proposes a method of cutting a molding material that is melted and extruded from a die with a cutter device. According to this method, it is not necessary for a worker to approach the molding material that is melted or the like. Meanwhile, in this method, the molding material that is melted or the like adheres to a vicinity of an extrusion outlet of the die or the cutter. Therefore, it is necessary for the worker to periodically clean the die and the cutter, and the worker is burdened. In addition, since the cutter device is required in this method, a cost is high. In addition, since an installation space for the cutter device is required in this method, an extrusion film-forming apparatus is enlarged. These can be a serious problem in a case where the die is long in a width direction.

The present disclosure has been made in view of such circumstances, and one of the exemplary objects of an aspect thereof is to provide an extrusion film-forming apparatus capable of safely cutting a molding material that is melted or the like state extruded from a die at a relatively low cost.

In order to solve the problem described above, according to an aspect of the present disclosure, there is provided an extrusion film-forming apparatus including: a die that extrudes a molding material from a slit-shaped extrusion outlet; a die lip drive mechanism that changes a slit width of the extrusion outlet; and a control device that controls the die lip drive mechanism. During the extrusion of the molding material, the control device controls the die lip drive mechanism to temporarily decrease the slit width of the extrusion outlet for cutting the extruded molding material.

Any combination of the above components or embodiments in which the components or expressions of the present disclosure are replaced with each other between methods, apparatuses, systems, or the like are also effective as aspects of the present disclosure.

According to an aspect of the present disclosure, it is possible to provide an extrusion film-forming apparatus capable of safely cutting a molding material that is melted or the like state extruded from a die at a low cost.

### BRIEF DESCRIPTION OF THE DRAWINGS

Fig. 1 is a schematic configuration view of a film molding system including an extrusion film-forming apparatus according to an embodiment.
Fig. 2 is a sectional view taken along line A-A of Fig. 1.
Fig. 3 is a perspective view illustrating a die of Fig. 1 and its periphery.
Figs. 4A and 4B are diagrams for describing a method of cutting a film.
Fig. 5 is a sectional view illustrating a die of an extrusion film-forming apparatus according to a modification example and a periphery thereof.
Fig. 6 is a sectional view illustrating a die of another extrusion film-forming apparatus according to the modification example and a periphery thereof.
Fig. 7 is a diagram illustrating a die of an extrusion film-forming apparatus according to another modification example and a periphery thereof.

### DETAILED DESCRIPTION OF THE INVENTION

Hereinafter, the present disclosure will be described with reference to the drawings based on preferred embodiments. The embodiment does not limit the disclosure and is exemplary, and all the features or combinations thereof described in the embodiment are not necessarily essential to the disclosure. In the embodiment, the same or equivalent components and members will be denoted by the same reference numerals, and appropriately duplicated description will be omitted.

Hereinafter, an XYZ orthogonal coordinate may be used. An X-axis extends in a width direction of a film to be molded in a sheet shape, a Z-axis extends in a vertical direction, and a Y-axis extends in a direction perpendicular to the X-axis and the Z-axis.

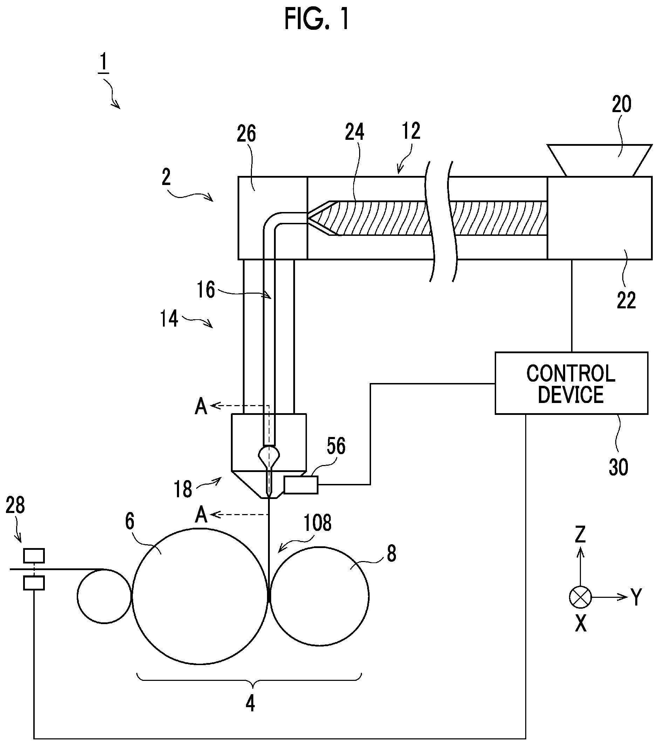

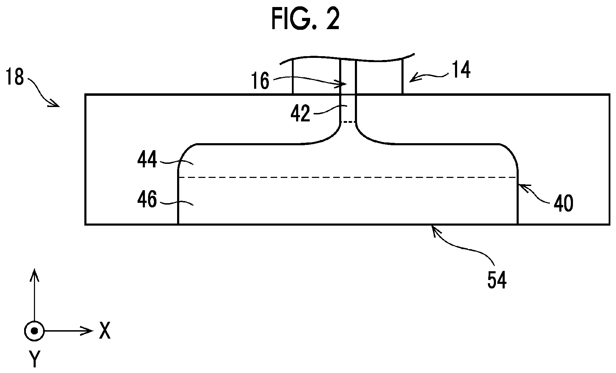

With reference to Fig. 1 and Fig. 2, description will be made. A film molding system 1 molds a thin film, and in the present embodiment, molds a film in a sheet shape. The film molding system 1 includes an extrusion film-forming apparatus 2, a pulling molding device 4, and a film transport device and a winder (not illustrated).

The extrusion film-forming apparatus 2 melts a molding material, and extrudes the molding material from a die 18 in a sheet shape. As a modification example, the extrusion film-forming apparatus 2 may soften the molding material, and extrude the molding material from the die 18 in a sheet shape. Hereinafter, the molding material extruded from the die 18 is also referred to as a film.

The pulling molding device 4 pulls the film extruded in a sheet shape, and executes a predetermined process on the film. In the present embodiment, the pulling molding device 4 cools the film.

As a modification example, a base material sheet may be fed to the pulling molding device 4. The pulling molding device 4 may pressure the base material sheet and the film in a sheet shape extruded from the die 18 to mold a laminated film.

The film transport device transports the film to the winder. The winder winds the film in a roll shape.

The extrusion film-forming apparatus 2 includes a material delivery unit 12, a transport unit 14 connected to a downstream side of the material delivery unit 12, a die 18 connected to a downstream side of the transport unit 14, a plurality of die lip drive mechanisms 56 that change a width (hereinafter, referred to as a slit width) of a slit-shaped extrusion outlet 54 of the die 18 in a Y-axis direction, a thickness gauge 28 that measures a thickness of a film, and a control device 30.

The material delivery unit 12 melts a solid molding material, and sends the melted material to a downstream side, that is, the transport unit 14. The material delivery unit 12 is a so-called extruder, and includes a hopper 20, a cylinder 22, a screw 24, and a crosshead portion 26.

The hopper 20 is open upward, and a granular molding material is input to the hopper 20. An inside of the hopper 20 is connected to the cylinder 22, and the molding material input to the hopper 20 enters the cylinder 22.

The cylinder 22 has a heating unit such as a heater. The molding material supplied to the cylinder 22 is heated by a heater and melted.

The screw 24 is accommodated in the cylinder 22. The screw 24 rotates to send the molding material to the crosshead portion 26. When a rotational speed of the screw 24 is increased, the amount of molding material to be sent out is increased.

The crosshead portion 26 changes a transport direction of the molding material from the Y-axis direction to a Z-axis direction, and guides the molding material to the transport unit 14. The crosshead portion 26 may be configured by using a known or future available technique.

The transport unit 14 transports the melted molding material to the die 18. The transport unit 14 includes a flow path 16 that extends in the Z-axis direction. The flow path 16 is not particularly limited, but has the same cross-sectional shape and the same cross-sectional area over the entire length.

The die 18 is a T-die in the present embodiment, and has the rectangular extrusion outlet 54 extending in an X-axis direction. The extrusion outlet 54 faces vertically downward. Therefore, the die 18 extrudes the transported melted molding material from the extrusion outlet 54 in a vertically downward direction, that is, in a gravity direction in a sheet shape.

A flow path 40, which is an internal space of the die 18, has an upstream portion 42, a midstream portion 44, and a downstream portion 46. The upstream portion 42 is connected to the flow path 16 of the transport unit 14. An upper end of the upstream portion 42 has the same cross-sectional shape and the same cross-sectional area as the flow path 16 of the transport unit 14. The midstream portion 44 is located between the upstream portion 42 and the downstream portion 46, and is connected to the upstream portion 42 and the downstream portion 46. A dimension of the midstream portion 44 in the X-axis direction is increased toward a downstream side. The downstream portion 46 has a tapered portion in which the dimension in the Y-axis direction becomes shorter toward the downstream side. A lower end of the downstream portion 46 of the flow path 40 constitutes the extrusion outlet 54. The molding material flows in from the upstream portion 42, spreads in the X-axis direction in the midstream portion 44, is thinned in the Y-axis direction in the downstream portion 46, and is extruded from the extrusion outlet 54 in a sheet shape.

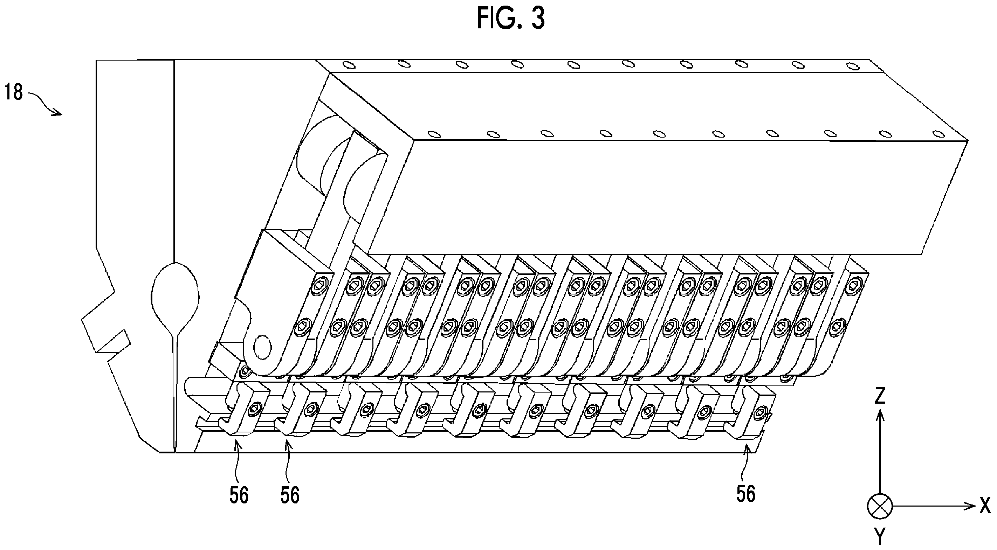

With reference to Fig. 3, the description will be continued. The plurality of die lip drive mechanisms 56 are disposed at, for example, equal intervals in the X-axis direction. Each of the plurality of die lip drive mechanisms 56 changes a slit width of the extrusion outlet 54 at each position in the X-axis direction. Specifically, each of the plurality of die lip drive mechanisms 56 pulls the die 18 in the Y-axis direction at each position in the X-axis direction to increase the slit width of the extrusion outlet 54, and pushes the die 18 in the Y-axis direction to decrease the slit width of the extrusion outlet 54.

With reference to Fig. 1, the thickness gauge 28 measures a thickness of the film at each position in the X-axis direction, for example, at a predetermined period. The thickness gauge 28 transmits the measured thickness to the control device 30.

The control device 30 controls the die lip drive mechanism 56. Specifically, the control device 30 executes a calculation based on the measurement value of the thickness gauge 28, and operates each of the die lip drive mechanisms 56 such that a designated thickness of the film is obtained.

The above is a basic configuration of the film molding system 1. Subsequently, the operation will be described.

The extrusion film-forming apparatus 2 melts the granular molding material supplied from the hopper 20 by the cylinder 22. The melted molding material is sent to the downstream side by the rotation of the screw 24. The crosshead portion 26 sends the melted molding material to the transport unit 14. The molding material is sent to the die 18 through the transport unit 14, and is extruded from the extrusion outlet 54 in a sheet shape. The control device 30 controls each of the die lip drive mechanisms 56 in accordance with an instruction value of the thickness of the film at an appropriate timing before a start of molding and/or after the start of the molding. In addition, the control device 30 controls each of the die lip drive mechanisms 56 to correct a deviation in thickness of the film during the molding.

Incidentally, in the extrusion film-forming apparatus 2, it is necessary to cut the film extruded from the extrusion outlet 54 of the die 18 at various timings. For example, in preparation for starting the molding, it is necessary to cut the film at a position higher than two rollers 6 and 8, for example, in order to pass the film between the two rollers 6 and 8 of the pulling molding device 4. For example, in some cases, the film is cut to switch a winding core for winding the film in the winder.

Therefore, in the present embodiment, the control device 30 controls the die lip drive mechanism 56 while the molding material is being extruded from the extrusion outlet 54, and temporarily decrease the slit width of the extrusion outlet 54 for cutting the film F.

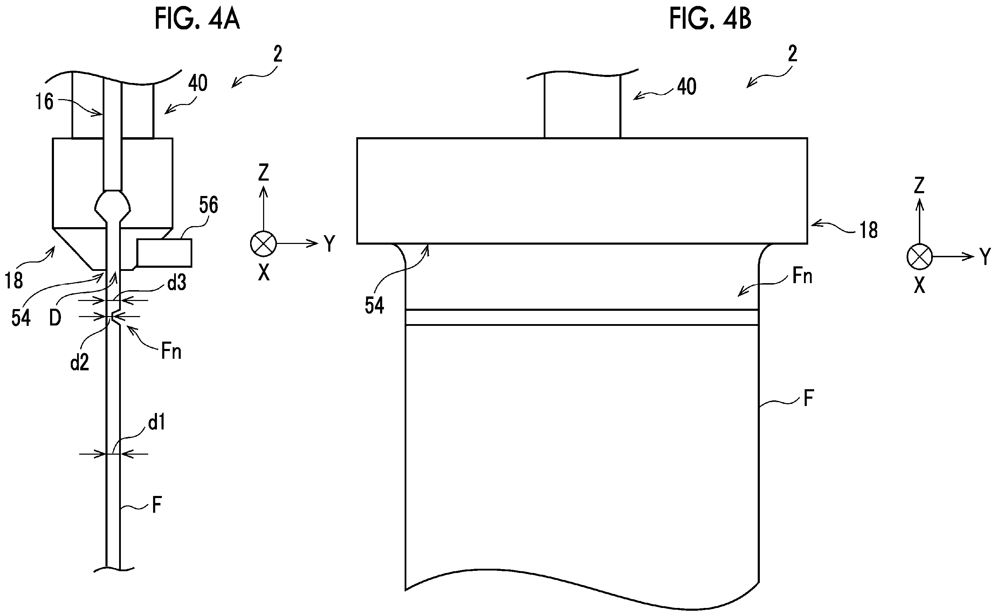

The embodiment will be described in detail with reference to Figs. 4A and 4B. Fig. 4A is a diagram when the die 18 and its periphery are viewed in the X-axis direction, and Fig. 4B is a diagram when the die 18 and its periphery are viewed in the Y-axis direction. The control device 30 decreases a slit width D of the extrusion outlet 54 in the Y-axis direction from a first width d1 to a second width d2 (< d1), and expands the slit width D from the second width d2 to a third width d3 (> d2) after a predetermined time (for example, 1 second) elapses.

Accordingly, a thickness of the extruded film F is also changed in an order of d1 → d2 → d3 in accordance with the change in the slit width D, and a notch portion (depression) Fn, which is a portion at which the thickness is locally reduced in the film F and extends in the X-axis direction, is formed. The notch portion Fn is thin, that is, has low stiffness. Accordingly, the film F is cut at the notch portion Fn by a weight of a portion hanging down below the notch portion Fn.

For example, the control device 30 may control a moving mechanism (not illustrated) to pull the pulling molding device 4 back to a position at which the pulling molding device 4 does not face the extrusion outlet 54 of the die 18 in the vertical direction, and start film formation and temporarily decrease the slit width D of the extrusion outlet 54 during the film formation to form the notch portion Fn and cut the film, and return the pulling molding device 4 to a position at which the pulling molding device 4 faces the extrusion outlet 54 of the die 18 in the vertical direction, and receive the film dripping from the extrusion outlet 54 between the two rollers 6 and 8.

Preferably, an actuator of the die lip drive mechanism 56 is highly responsive to realize the local notch portion Fn. Therefore, the actuator of the die lip drive mechanism 56 is preferably a fluid pressure actuator, for example, a pneumatic actuator.

Preferably, the control device 30 simultaneously deforms the slit width D of the extrusion outlet 54 in the entire range in the X-axis direction. In this case, the notch portion Fn extending straight in the X-axis direction is formed, and therefore, the film F is cut straight in the X-axis direction.

Meanwhile, when the film F is cut, a timing of changing the slit width D of the extrusion outlet 54 may be different in a partial range in the X-axis direction. In addition, when the film F is cut, the slit width D of the extrusion outlet 54 may not be changed in at least the partial range in the X-axis direction.

The first width d1 and the third width d3 may have the same size or may have different sizes.

The third width d3 may be a width having the same size as a thickness of a product. In this case, the product molding can be started, by using the slit width D as it is or by only slightly changing the slit width D.

The first width d1 may be a width more than the third width d3. For example, the first width d1 may be a width more than the thickness of the molding product. In this case, the portion hanging down below the notch portion Fn is relatively heavy, and thus the film is easily cut at the notch portion Fn.

The second width d2 may be 0. That is, the extrusion outlet 54 may be completely closed. Meanwhile, when the extrusion outlet 54 of the die 18 is completely closed, metals come into contact with each other, and an inside of the die 18 (that is, a flow path surface) may be scratched or abraded. In addition, when the extrusion outlet 54 of the die 18 is completely closed, the film F is cut immediately near the extrusion outlet 54. Accordingly, the film F can adhere to the vicinity of the extrusion outlet 54. Therefore, the second width d2 is preferably more than 0. That is, it is preferable that the extrusion outlet 54 is not completely closed.

The position at which the film F is cut may be different depending on a size of the second width d2. The film is cut immediately near the extrusion outlet 54 when the second width d2 is 0, and is cut at a position away from the extrusion outlet 54 as the second width d2 is increased. When the second width d2 is small and thus the film F is cut near the extrusion outlet 54, there is a possibility that the remaining film F may adhere near the extrusion outlet 54, and when the second width d2 is large and thus the notch portion Fn is thick, there is a possibility that the film F may not be cut since the notch portion Fn has high stiffness. Therefore, the widths d1 to d3 are determined, for example, by experiments or simulations in consideration of these.

For example, the following three combination patterns are conceivable for the widths d1 to d3. By adopting an appropriate pattern, the present embodiment can also be applied to various molding materials having different materials and characteristics.

### (First Pattern)

First width d1: same width as width set during production molding
Second width d2: d2 < d1 and d2 < d3
Third width d3: same width as width set during production molding

In this case, after the cutting, the production molding can be started by using the slit width D of the extrusion outlet 54 as it is or by only slightly changing the slit width D.

### (Second Pattern)

First width d1: width more than width set during production molding
Second width d2: d2 < d1 and d2 < d3
Third width d3: same width as width set during production molding

In this case, a portion hanging down below the notch portion Fn becomes heavier, and thus the film is easily cut at the notch portion Fn. In addition, after the cutting, the production molding can be started by using the slit width D of the extrusion outlet 54 as it is or by only slightly changing the slit width D.

### (Third Pattern)

First width d1: width more than width set during production molding
Second width d2: d2 < d1 and d2 < d3
Third width d3: width more than width set during production molding

In this case, a portion hanging down below the notch portion Fn becomes heavier, and thus the film is easily cut at the notch portion Fn.

According to the present embodiment described above, the melted molding material can be cut safely, that is, without a worker approaching the melted molding material. In addition, since a cutter device is not required for cutting the melted molding material, a cost can be reduced. That is, according to the present embodiment, it is possible to provide the extrusion film-forming apparatus 2 having a relatively low cost and capable of safely cutting the melted molding material.

Above, the present disclosure has been described based on the embodiments. The embodiment is exemplary, and it will be understood by those skilled in the art that various modification examples can be made for combinations of the respective components and respective processing processes and such modification examples are also within the scope of the present invention.

### (Modification Example 1)

In the embodiment, a case where the film molding system 1 molds a film in a sheet shape is described, but the present disclosure is not limited thereto. For example, the film molding system 1 may mold a film in a tubular shape. In this case, the die 18 of the extrusion film-forming apparatus 2 of the film molding system 1 may be a round die, that is, a die having a ring-shaped extrusion outlet. The slit width of the extrusion outlet in this case is a width of the extrusion outlet in the radial direction.

### (Modification Example 2)

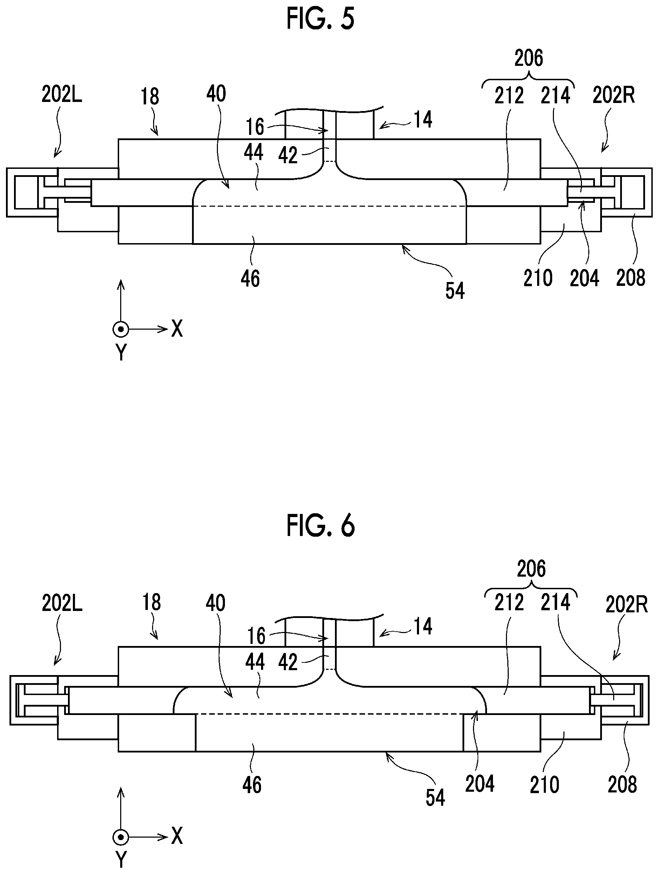

With reference to Fig. 5 and Fig. 6, description will be made. Figs. 5 and 6 correspond to Fig. 2. In the present modification example, the extrusion film-forming apparatus 2 includes volume change units 202R and 202L that change a volume of the flow path 40 of the die 18. The volume change unit 202R is disposed at an end portion on one side of the die 18 in the X-axis direction, and the volume change unit 202L is disposed at an end portion on the other side of the die 18 in the X-axis direction. The volume change units 202R and 202L are simultaneously driven by the control device 30 and have the same configuration. Therefore, the following description will be made with the volume change units 202R and 202L being collectively referred to as a "volume change unit 202".

The volume change unit 202 includes a chamber 204, a piston 206, and an actuator 208.

The chamber 204 is connected to the flow path 40 (midstream portion 44 in the illustrated example) and is airtight from an outside by the partition wall 210. The piston 206 is disposed in the chamber 204. The chamber 204 extends parallel to the X-axis.

The piston 206 includes a head 212 and a rod 214. The head 212 is fixed to one end of the rod 214. The head 212 is in airtight contact with an inner peripheral surface of the chamber 204. The other end of the rod 214 penetrates the partition wall 210 and extends into the actuator 208. The rod 214 and the partition wall 210 are sealed. The actuator 208 is controlled by the control device 30. When a pressure in the actuator 208 is decreased, the piston 206 is pulled in a direction away from the flow path 40. When the pressure in the actuator 208 is increased, the piston 206 is pushed toward the flow path 40. Hereinafter, a state in which an end surface of the head 212 is flush with an inner wall surface defining an X-axial end surface of the downstream portion 46 of the flow path 40, that is, the state illustrated in Fig. 5 will be described with the piston 206 located at a tip position. In addition, a state in which the head 212 retreats in the chamber 204, that is, the state illustrated in Fig. 6 is assumed to be a state in which the piston 206 is at a retreat position.

In a case where the piston 206 is at the retreat position, it can be considered that the flow path 40 and an internal space of the chamber 204 form one continuous space. That is, the internal space of the chamber 204 can also be regarded as constituting the flow path 40. Therefore, in a case where the piston 206 is at the retreat position, the volume of the flow path 40 is more than the volume of the flow path 40 in a case where the piston 206 is at the tip position. That is, when the actuator 208 drives the piston 206 between the tip position and the retreat position, the volume of the flow path 40 is changed.

The control device 30 increases the volume of the flow path 40 at the same time as the formation of the notch portion Fn or after the formation of the notch portion Fn. That is, the volume of the flow path 40 is increased at the same time as or after the slit width of the extrusion outlet 54 is temporarily decreased for cutting the film.

The notch portion Fn is pulled downward by a weight of a hanging portion on a lower side. On the other hand, while the volume of the flow path 40 is increased, a speed at which the molding material is extruded from the extrusion outlet 54 is reduced. Accordingly, the notch portion Fn is also pulled upward. That is, the notch portion Fn is pulled up and down, so that the notch portion Fn is more reliably cut.

As a further modification example, the volume change unit 202 may be disposed and configured to change a volume of the flow path 16 of the transport unit 14. That is, the volume change unit 202 may be disposed and configured to change a volume of a flow path leading to the extrusion outlet 54.

Meanwhile, the volume of the flow path 40 close to the extrusion outlet 54 is disposed and configured to change such that the amount of delay from the operation of the volume change unit 202 to the change in the extrusion amount of the molding material can be reduced. In addition, the flow path 40 of the die 18 close to the extrusion outlet 54 has a lower pressure than the flow path 16 of the transport unit 14. Therefore, energy required when the piston 206 is retracted in the chamber 204 can be reduced by disposing the volume change unit 202 near the extrusion outlet 54. Accordingly, the actuator 208 can be downsized.

### (Modification Example 3)

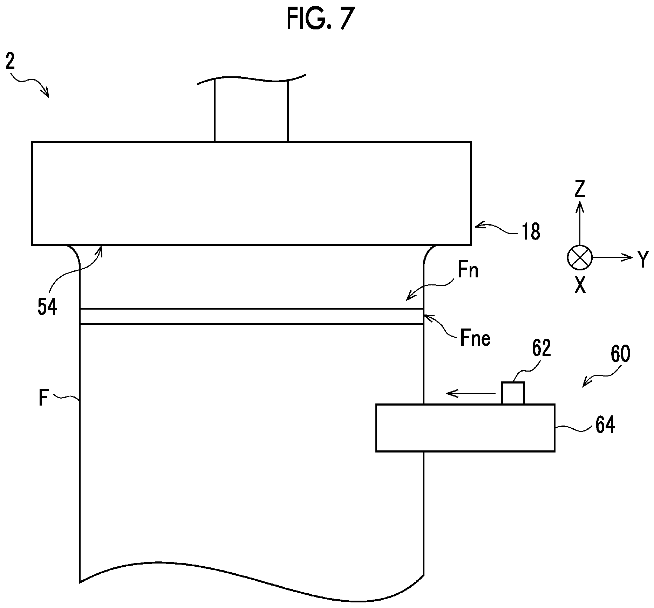

With reference to Fig. 7, the description will be continued. Fig. 7 is a diagram of the die 18 of the extrusion film-forming apparatus 2 according to another modification example and its periphery in the Y-axis direction. Fig. 7 corresponds to Fig. 4B.

In the present modification example, the extrusion film-forming apparatus 2 further includes a cutting support unit 60. The control device 30 further controls the cutting support unit 60. The control device 30 operates the cutting support unit 60 in conjunction with formation of the notch portion Fn (that is, an operation of each die lip drive mechanism 56), and applies a force to a portion hanging down below the notch portion Fn to apply stress to an end portion Fne of the notch portion Fn in the X-axis direction, thereby making it easy to cut the film F at the notch portion Fn.

For example, the cutting support unit 60 includes a pressing member 62 and a moving mechanism 64 that moves the pressing member 62. The pressing member 62 may be a rod-shaped member extending in the Y-axis direction.

The control device 30 may control the moving mechanism 64 to move the pressing member 62 in the X-axis direction as illustrated, and press a portion of the film hanging down below the notch portion Fn in the X-axis direction (that is, the width direction of the film) by the pressing member 62. Accordingly, the stress is applied to the end portion Fne of the notch portion Fn.

The control device 30 may control the moving mechanism 64 to move the pressing member 62 in the Y-axis direction and press a portion of the film hanging down below the notch portion Fn in the Y-axis direction (that is, the thickness direction of the film) by the pressing member 62. For example, the notch portion Fn may be pressed in the Y-axis direction near the end portion Fne of the notch portion Fn. Accordingly, the stress is applied to the end portion Fne of the notch portion Fn.

When the stress is applied to the end portion Fne of the notch portion Fn, the notch portion Fn is expected to start cutting from the end portion Fne thereof, and the entire notch portion Fn is expected to be reliably cut.

Any combination of the embodiment and modification examples described above is also useful as an embodiment of the present invention. A new embodiment made from the combination has the effects of each of the embodiment and the modification examples that are combined.

### Brief Description of the Reference Symbols

- 2:: Extrusion film-forming apparatus
- 14:: Transport unit
- 18:: Die
- 30:: Control device
- 54:: Extrusion outlet
- 56:: Die lip drive mechanism
- 60:: Cutting support unit
- 202:: Volume change unit

## Claims

1. An extrusion film-forming apparatus (2) comprising:
a die (18) that extrudes a molding material from a slit-shaped extrusion outlet (54);
a die lip drive mechanism (56) that changes a slit width (D) of the extrusion outlet (54); and
a control device (30) that controls the die lip drive mechanism (56),
wherein during the extrusion of the molding material, the control device (30) controls the die lip drive mechanism (56) to temporarily decrease the slit width (D) of the extrusion outlet (54) for cutting the extruded molding material.

2. The extrusion film-forming apparatus (2) according to claim 1,
wherein the control device (30) increases the temporarily decreased slit width (D) of the extrusion outlet (54) to a width set during production molding.

3. The extrusion film-forming apparatus (2) according to claim 1,
wherein the control device (30) increases the width to be more than a width set during production molding before temporarily decreasing the slit width (D) of the extrusion outlet (54).

4. The extrusion film-forming apparatus (2) according to claim 1, further comprising:
a volume change unit (202) that changes a volume of a flow path (16, 40) leading to the extrusion outlet (54),
wherein the control device (30) controls the volume change unit (202) to increase the volume of the flow path (16, 40) simultaneously with or after decreasing the slit width (D) of the extrusion outlet (54).

5. The extrusion film-forming apparatus (2) according to claim 1, further comprising:
a cutting support unit (60) that applies a force to a portion of a film hanging down below a locally thinned portion formed by decreasing the slit width (D) of the extrusion outlet (54).
